# FASCICULE DE BREVET EUROPEEN

(11) **EP 3 455 045 B1**
(45) Date de publication et mention de la délivrance du brevet: **05.05.2021**
(21) Numéro de dépôt: 17722041.5
(22) Date de dépôt: 10.05.2017
(51) Int. Cl.: B29C 33/06, B29C 35/08, B29C 45/73, B29C 35/16

(54) **PROCÉDÉ ET DISPOSITIF POUR LE CHAUFFAGE D'UN MOULE**
VERFAHREN UND VORRICHTUNG ZUM ERWÄRMEN EINER FORM
METHOD AND DEVICE FOR HEATING A MOULD

(30) Priorité: 10.05.2016 FR 1670219
(43) Date de publication de la demande: 20.03.2019
(73) Titulaire: Roctool, 73370 Le Bourget du Lac (FR)
(72) Inventeur: FEIGENBLUM, José, 73170 Saint Paul (FR)
(74) Mandataire: Ipside
(86) Numéro de dépôt international: PCT/EP2017/061239
(87) Numéro de publication internationale: WO 2017/194639

(56) Documents cités:
- WO-A1-2013/189907
- WO-A1-2016/151127
- DE-A1-102008 023 479
- DE-A1-102014 114 772
- US-A- 5 728 309
- US-A1- 2012 292 826

## Description

L'invention concerne un procédé et un dispositif pour le chauffage d'un moule. L'invention est plus particulièrement mais non exclusivement adaptée au chauffage d'un moule d'injection plastique. Un tel moule comprend un cavité moulante dans laquelle est injectée la matière plastique en fusion. Ladite cavité est délimitée par des surfaces moulantes dont la pièce moulée reproduit la forme. Ledites surfaces moulantes sont portées par au moins deux coquilles séparables l'une de l'autre, de sorte à ouvrir le moule et démouler la pièce solidifiée.

Durant l'opération de moulage, la cavité moulante est soumise à un cycle thermique afin que la température de ladite cavité soit suffisante pour que la matière injectée conserve sa fluidité et la remplisse la correctement. Puis, la température est abaissée, le cas échéant par un refroidissement forcé, de sorte à solidifier la pièce, jusqu'à l"ouverture du moule et au démoulage de la pièce, où la température des surfaces moulantes chute, avant d'être réchauffées et de recommencer le cycle. Ainsi, le temps de cycle, paramètre particulièrement critique en situation de grande série, est dicté par les temps de chauffage et de refroidissement de la cavité moulante. La qualité des pièces obtenues, notamment leur aspect, dépend de la capacité d'obtenir une répartition uniforme de la température sur les surfaces moulantes de la cavité, et dans certaines circonstances la qualité structurelle des pièces obtenues dépend des vitesses de chauffage et de refroidissement de la matière moulée aux contact des surfaces moulantes. La technique de chauffage par induction est particulièrement adaptée pour la réponse à ces besoins.

Le document EP1924415 décrit un dispositif de chauffage par induction de la cavité moulante d'un moule d'injection plastique, dans lequel des inducteurs circulent dans les matrices portant les surfaces moulantes. Toutefois le rendement énergétique atteint lors de l'utilisation d'un moule constitué d'un alliage d'aluminium, situation courante en matière d'injection plastique, conduit à l'installation d'une puissance électrique importante.

Le document EP2861399 décrit un procédé et un dispositif pour le préchauffage d'un moule d'injection plastique. Ledit dispositif comporte essentiellement deux moyens de chauffage pour réaliser un chauffage le plus direct possible des faces moulantes de la cavité. Dans ce dispositif de l'art antérieur, l'une des surfaces moulantes est chauffée en plaçant la matrice portant ladite face moulante, face à un noyau électriquement conducteur dont elle est isolée électriquement de sorte que la surface moulante de ladite matrice constitue l'une des faces d'un entrefer avec ledit noyau. L'ensemble noyau et matrice est placée à l'intérieur d'un circuit d'induction. La surface moulante est chauffée par la circulation des courants induits sur les faces de l'entrefer. L'autre surface moulante, portée par l'autre matrice constituant le moule, est chauffée par rayonnement ou par conduction en mettant celle-ci soit en contact soit en exposition vis-à-vis d'un noyau préalablement chauffé. Cette solution de l'art antérieur nécessite que l'ouverture du moule soit suffisante pour pouvoir insérer le noyau entre les deux matrice. Dans tous les cas il ne s'agit que d'une solution de préchauffage, ne permettant pas la régulation de la température de la cavité moulante une fois la cavité fermée.

Ces solutions de l'art antérieur donnent satisfaction,; toutefois elles nécessitent des installations d'une puissance électrique importante, la puissance requise pour chauffer l'une des matrices état couramment de l'ordre de 100 kW. Lorsque le site de fabrication comporte plusieurs installations de ce type, la puissance de l'installation électrique correspondante devient un désavantage.

Le document DE102014114772 décrit un moule d'injection plastique dont une zone très localisée est chauffée en approchant un élément chauffé de la cavité moulante, dont l'épaissuer de paroi est réduite dans la zone d'application de cette élément, dans le but notamment de supprimer la bavure au niveau du plan de jojnt du moule. Ainsi, ce dispositif ne chauffe que la zone considérée après ou pendant que la pièce moiulée est refroidie, pour séparer la bavure du reste de la pièce.

L'invention vise à résoudre inconvénients de l'art antérieur et concerne à cette fin un moule, notamment pour le moulage par injection, selon l'une quelconque des revendications 1 à 3.

Ainsi, après avoir porté l'accumulateur thermique à une températuure appropriée, celui-ci est simplement maintenue à cette température ce qui nécessite une puissance réduite.

L'invention est avantageusement mise en oeuvre selon les modes de réalisation et les variantes exposés ci-après, lesquels sont à considérer individuellement ou selon toute combinaison techniquement opérante.

Avantageusement la coquille comporte un circuit pour la circulation d'un fluide caloporteur en vue du refroidissement de la surface moulante. Ainsi le moule objet de l'invention permet de mettre en oeuvre un refroidissement forcé de la cavité moulante sans affecter la température de l'accumulateur thermique.

Selon une variante de réalisation, l'accumulateur thermique est un bloc de graphite. Ce mode de réalisation permet notamment de privilégier le chauffage par rayonnement de la coquille.

Selon une autre variante de réalisation, compatible avec la précédente, l'accumulateur thermique comprend un matériau à changement de phase. Ce mode de réalisation permet de stocker de l'énergie thermique dans la chaleur latente de changement phase dudit matériau.

L'invention concerne également un procédé pour le chauffage de la surface d'un moule l'un quelconque des modes de réalisation de l'invention, lequel procédé comprend les étapes selon la revendicacion 9.

Avantageusement, l'étape ii) comprend un chauffage de l'accumulateur thermique. Ce mode de réalisation permet notamment de réguler la température de la cavité moulante.

Selon un mode de réalisation, l'étape ii) est réalisée en déplaçant la coquille face à l'accumulateur thermique. Ainsi, l'accumulateur thermique, portée à haute température reste fixe. Ce mode de réalisation permet, notamment d'exposer plusieurs moules selon un cycle pendulaire, l'un des moules étant chauffé alors qu'un autre refroidit en limitant la puissance installée à celle nécessaire au chauffage d'un seul accumulateur thermique.

Selon ce mode de réalisation, le transfert de chaleur de l'accumulateur thermique vers la coquille est préférentiellement réalisé par rayonnement.

De manière additionnelle, le transfert thermique de l'accumulateur thermique vers la coquille comprend un part de convection forcée d'un gaz. Ainsi le transfert thermique est plus rapide.

Selon un autre mode de réalisation, l'étape ii) est réalisé en mettant l'accumulateur thermique en contact avec une surface de la coquille. Ce mode de réalisation est plus particulièrement, mais non exclusivement, adapté à la réalisation d'un moule à chauffage autonome, bénéficiant des avantages de l'invention.

Selon ce dernier mode de réalisation, l'étape ii) est réalisée par la dilatation thermique et l'accumulateur thermique. Ainsi, l'exposition de la surface réceptrice de la coquille ne nécessite pas la mise en oeuvre d'un mécanisme de déplacement.

L'invention est exposée ci-après selon ses modes de réalisation préférés, nullement limitatifs, et en référence aux figures 1 à 4, dans lequelles :
- la figure 1 représente selon une vue ne coupe les coquilles d'un moule selon un exemple de réalisation du moule objet de l'invention ;
- la figure 2 illustre schématiquement une installation d'injection mettant en oeuvre le moule de la figure 1
- la figure 3 montre un autre exemple de réalisation d'une coquille d'un moule selon l'invention, figure 3A hors période de chauffage des surfaces moulantes, et figure 3B au cours du chauffage de la surface moulante ;
- et la figure 4 représente selon une vue partielle, une variante de réalisation de la coquille de la figure 3, figure 4A, hors période de chauffage de la surface moulante et figure 4B en cours de chauffage de la surface moulante.

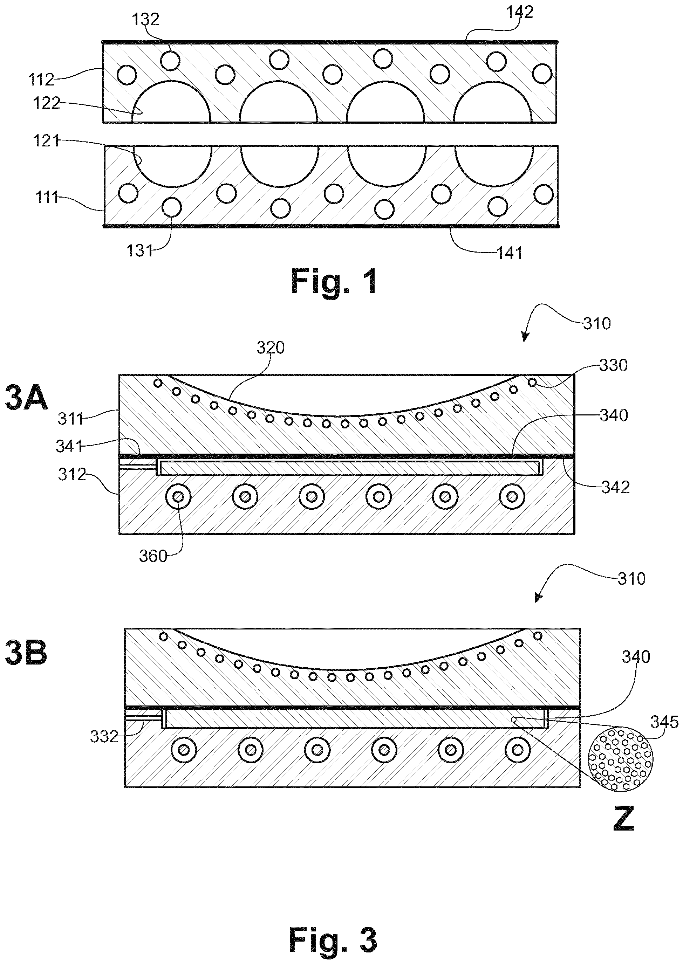

Figure 1, selon un exemple de réalisation, le moule objet de l'invention comprend 2 coquilles (111, 112) chacune portant une pluralité d'empreintes (121, 122) chaque empreinte correspondant aux surfaces moulantes pour la réalisation d'une pièce par injection de matière dans la cavité fermée constituée par chaque paire (121, 122) d'empreintes lorsque les deux coquilles (111, 112) sont mises en contact l'une de l'autre, c'est-à-dire que le moule est fermé. Lesdites coquilles sont constituées d'un matériau thermiquement conducteur, préférentiellement un matériau métallique tel qu'un alliage d'aluminium ou un acier d'outillage. Chaque demi coquille a une fonction structurale de résistance à la pression d'injection sans déformation des surfaces moulantes, de sorte que leur épaisseur est dimensionnée en conséquence. Selon cet exemple de réalisation, chaque coquille comporte des conduits (131, 132) pour la circulation d'un fluide caloporteur en phase liquide ou gazeuse, utilisé pour refroidir ladite coquille et plus particulièrement les surfaces moulantes et la matière au contact de celles-ci. Avantageusement, lesdits conduits (131, 132) comportent des turbulateurs (non représentés) pour améliorer les échanges par convection entre le fluide caloporteur et la coquille.

Selon cet exemple de réalisation, chaque coquille (111, 112) comporte une surface, dite surface réceptrice (141, 142), opposée aux empreintes selon cet exemple de réalisation. Toujours selon cet exemple de réalisation, la surface réceptrice comporte un revêtement favorisant l'absorption du rayonnement infrarouge. À titre d'exemples non limitatifs, ledit revêtement est constitué carbone amorphe déposé par voie physique en phase vapeur ou PVD, acronyme de « *Physical Vapor Déposition* » sur ladite surface réceptrice, ou est obtenu par un traitement chimique dit de brunissage de cette surface, ou encore par le dépôt électrolytique d'un chromage noir. L'exposition de la surface de réception de chaque demi coquille à la chaleur de l'accumulateur, que ce soit par conduction, rayonnement, convection ou une combinaison de ces modes de transfert thermique, permet de porter les surfaces moulantes des empreintes à une température adaptée à l'injection de la matière moulée, pour assurer un remplissage uniforme et complet des empreintes. La transmission de chaleur des surfaces réceptrices (141, 142) vers les surfaces moulantes (121, 122) s'effectue par conduction dans l'épaisseur des demi coquilles, ce qui assure une répartition uniforme de la température sur les surfaces moulantes et évite les défaut d'aspect sur les pièces obtenues au moyen du moule objet de l'invention.

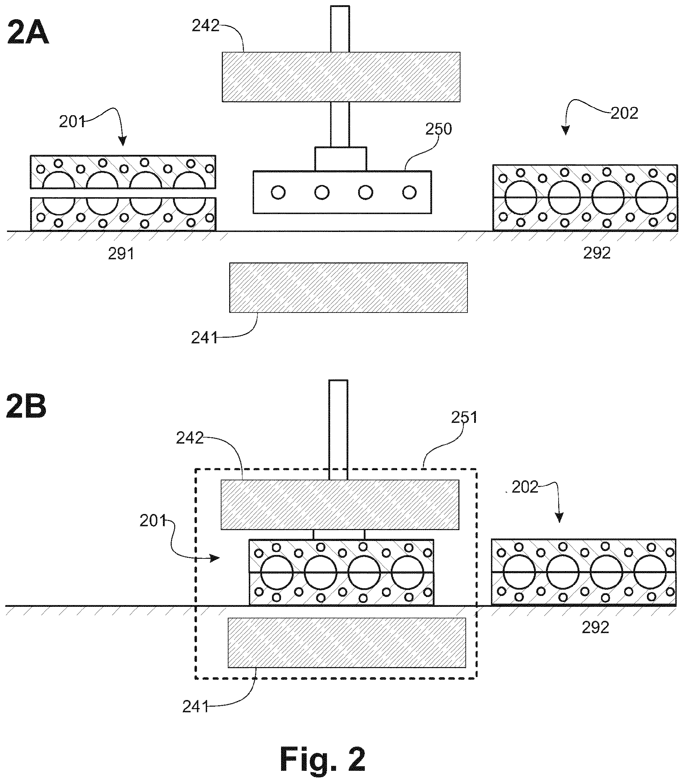

Figure 2A, selon un exemple d'installation mettant en oeuvre le moule objet de l'invention, ladite installation comprend, par exemple, 2 moules (201, 202) mis en oeuvre alternativement selon un automatisme pendulaire. À cette fin, ladite installation comprend 2 stations (291, 292) de déchargement, une station d'injection comprenant une tête d'injection (250) apte à injecter une matière plastique dans les cavités des moules (201, 202). L'installation comprend en outre un mécanisme (non représenté) pour transférer les moules (201, 202) de leur station de déchargement vers la station d'injection. Alternativement l'installation comprend plus de deux stations de déchargement placées sur un carrousel.

La station d'injection comporte deux accumulateurs thermiques (241, 242) constitués par exemples de blocs de graphite. Selon un premier exemple de réalisation chaque accumulateur thermique est chauffé par un circuit d'induction, par exemple en les plaçant chacun dans une spire parcourue par un courant alternatif à haute fréquence, par exemple comprise en 10 KHz et 100 KHz, de sorte à les porter à haute température, par exemple à une température comprise entre 700 °C et 1200 °C.

Alternativement les accumulateurs thermiques (241, 242) sont constitués d'un matériau ferromagnétique et comportent, au moins sur une de leurs faces, un revêtement pour améliorer leur émissivité thermique.

Selon un mode de réalisation alternatif du circuit d'induction, les accumulateurs thermiques (241, 242) sont chauffés par des inducteurs placés dans des boyaux creusés dans lesdits accumulateurs.

Figure 2B, selon un exemple de mise oeuvre par un automatisme pendulaire, lorsque qu'un des moules (201) se trouve dans la station d'injection, l'autre moule (202) se trouve dans sa station de déchargement (292). En arrivant dans la station d'injection, le moule (201) est soumis au rayonnement des accumulateurs thermiques (241, 242) sur ses surfaces réceptrices. À titre d'exemple, le flux thermique émis par rayonnement par un accumulateur thermique en graphite chauffé à 1000 °C atteint des valeurs de l'ordre de 150.10³ W.m⁻². Avantageusement, un dispositif (non représenté) permet de souffler sur le moule un gaz réchauffé au contact desdits accumulateurs thermiques (241, 242) afin de provoquer un échange thermique par convection forcée avec les surfaces du moule. Avantageusement, la station d'injection comprend une enceinte (251) remplie d'un gaz neutre préservant le moule et les accumulateurs thermiques de l'oxydation.

Soumis à un tel flux thermique, le moule (201) chauffe rapidement jusqu'à ce que la température adaptée à l'injection soit atteinte dans ses cavités moulantes. L'injection est alors réalisée. Une fois l'injection réalisée le moule (201) est transféré de la station d'injection vers sa station de déchargement ce qui a pour effet d'amener l'autre moule (202) dans la station d'injection et de le soumettre au rayonnement des accumulateurs thermique. La station de déchargement comprend avantageusement des moyens pour faire circuler un fluide caloporteur dans les conduits du moule, de sorte à accélérer son refroidissement. Ledit fluide caloporteur est, par exemple, de l'eau, de l'huile ou un gaz. Selon un exemple de réalisation, ledit fluide caloporteur circule dans un circuit fermé comprenant un groupe réfrigérant.

Au delà de la phase de chauffage initiale des accumulateurs thermiques (241, 242), laquelle est réalisée sur un temps suffisant pour limiter l'appel de puissance, l'énergie consommée correspond au maintien en température desdits accumulateurs thermiques ce qui nécessite un appel de puissance moins important que le chauffage direct du moule froid par induction. L'utilisation de l'induction pour le chauffage des accumulateurs thermique permet néanmoins de continuer à chauffer ceux-ci lorsqu'ils transfèrent leur chaleur au moule par rayonnement, convection ou conduction.

Figure 3A, selon un autre exemple de réalisation d'une demi coquille (310) d'un moule selon l'invention, celle-ci comprend deux parties (311, 312) par exemple constituées d'un alliage d'aluminium. L'une des deux parties (311) porte une empreinte (320) constituant une surface moulante, et des conduits (330) pour la circulation d'un fluide caloporteur de refroidissement de ladite surface moulante Ladite première partie (311) comprend une surface réceptrice (341).

La deuxième partie (312) de la demi coquille, fixée à la première, comprend des boyaux dans lesquels s'étendent des inducteurs (360). Selon un mode de réalisation particulier, ladite deuxième partie est constituée d'un matériau réfractaire non métallique par exemple une céramique ou un béton, transparent au champ magnétique. Les inducteurs sont, par exemple, constitués de tubes de cuivre ou de tresses de fils de cuivre. Ils réalisent un circuit d'induction. Un accumulateur thermique (340) est inséré entre les deux parties (311, 312)de la demi coquille. Ledit accumulateur thermique est par exemple constituée d'un acier ferromagnétique à point de Curie élevé, par exemple un alliage à base de fer (Fe) et de silicium (Si) ou de fer (Fe) et de cobalt (Co). Il est préférentiellement isolé thermiquement de la deuxième partie (312) de la demi coquille. Lesdits inducteurs (360) sont connectés à un générateur haute fréquence (non représenté).

Lorsqu'il est chauffé, par l'intermédiaire des inducteurs (360), à une température dite de maintient, ledit accumulateur n'entre pas en contact avec la surface réceptrice (341) de la première partie (311) de la coquille. La résistance de contact entre l'accumulateur (340) et la surface réceptrice est élevée et le transfert thermique entre l'accumulateur thermique (340) et la partie (311) de la coquille portant l'empreinte (320) est réduit.

Figure 3B, afin de chauffer la première partie de la demi coquille, la température de l'accumulateur thermique est augmentée au moyen des inducteurs, ledit accumulateur se dilate et vient alors en contact intime avec la surface réceptrice (341). La résistance de contact baisse, et l'accumulateur thermique transmet sa chaleur à la partie (311) de la demi coquille portant l'empreinte (320). Avantageusement, la surface réceptrice (341) de la première partie de la coquille comporte une couche d'interface (342), constituée d'un feuillard mince en matériau thermiquement conducteur mais malléable ou écrasable, et brasé ou soudé sur la surface de réceptrice. À titres d'exemples non limitatifs, ledit feuillard est constitué de cuivre ou d'un alliage de cuivre, de nickel ou de graphite. Ainsi, l'entrée en contact de l'accumulateur thermique (340) avec ledit feuillard déforme celui-ci, afin de compenser les légères différences de formes entre l'accumulateur thermique et la surface réceptrice, et ainsi d'assurer un transfert thermique optimal entre les deux. Ainsi, l'accumulateur thermique est maintenu à une température de maintien réduite de 50 °C à 100 °C par rapport à sa température en phase de chauffage. Ce maintien nécessite la mise en oeuvre d'une puissance électrique réduite, et le surcroît de puissance nécessaire durant la phase de chauffage est également réduit du fait du préchauffage de l'accumulateur.

Ledit accumulateur thermique (340) n'a pas de fonction structurale dans le moule. Sa constitution est ainsi choisie pour optimiser sa réponse au chauffage par induction et sa capacité de transférer sa chaleur à la première partie (311) de la demi coquille et par suite à la surface moulante. Selon un mode de réalisation particulier, détail Z, ledit accumulateur est de structure alvéolaire, chaque alvéole (345) étant remplie d'un matériau à changement phase présentant une chaleur latente de transition . Avantageusement, le matériau à changement de phase est choisi de sorte que sa température de transition soit proche de la température de maintien de l'accumulateur thermique. À titre d'exemple, si la température de maintien est de l'ordre de 200 °C le matériau à changement de phase est par exemple un matériau organique comme un polyol. Si la température de maintien est plus élevée, par exemple de l'ordre de 400 °C, ou plus, le matériau à changement de phase est par exemple un sel. Selon ces exemples, le matériau à changement de phase passe de l'état solide, à basse température, à l'état liquide à température plus élevée en absorbant une chaleur latente de transition. En passant de la phase haute température à la phase basse température le matériau à changement de phase se solidifie et restitue ladite chaleur latente de transition. La combinaison de la structure alvéolaire et de la présence d'un matériau à changement de phase permet d'augmenter l'inertie thermique apparente de l'accumulateur thermique (340) pendant son maintien à la température de maintien, toute en conservant une capacité de chauffage rapide jusqu'à la température de chauffage.

Le refroidissement de l'empreinte est réalisé par la circulation du fluide caloporteur dans les conduits (330) de la première partie (311) de la coquille. Avantageusement, la deuxième partie (312) de la coquille comprend des canaux (332) pour l'adduction d'un fluide caloporteur autour de l'accumulateur thermique (340) de sorte à accélérer son refroidissement jusqu'à sa température de maintien après la phase de chauffage et de maintien en température de l'empreinte (320).

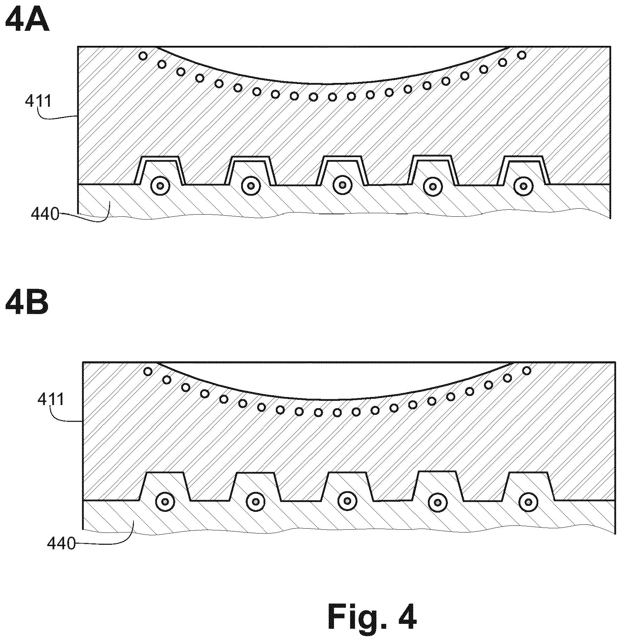

Figue 4 selon une variante du mode de réalisation représenté figure 3, l'interface entre la première partie (411) de la coquille est l'accumulateur thermique (440) n'est pas plane mais présente des profils complémentaires. Ce mode de réalisation permet d'augmenter la surface de contact potentielle entre ladite première partie (411) de la coquille, portant l'empreinte, et l'accumulateur thermique (440). Figure 4A en dehors de la période de chauffage de la première partie (411), les deux profils sont disjoints au niveau de la surface réceptrice. Figure 4B, en situation de chauffage, la dilatation thermique de l'accumulateur thermique (440) du fait de son élévation de température porte son profil au contact de la surface réceptrice de la première partie (411) de la coquille réduisant ainsi la résistance thermique de contact entre les deux et favorisant le transfert thermique par conduction.

La description ci-avant et les exemples de réalisation, montrent que l'invention atteint le but visé, et permet de profiter des avantages du chauffage par induction pour chauffer la cavité moulante d'un moule, constitué d'un matériau non ferromagnétique, par exemple un alliage d'aluminium, tout en réduisant l'appel de puissance nécessaire pour réaliser ce chauffage et ainsi conserver un dimensionnement raisonnable du circuit électrique d'alimentation.

## Revendications

1. Moule, pour le moulage par injection d'une matière plastique, et comprenant :
- deux coquilles (111, 112, 310) comprenant des surfaces moulantes, et délimitant une cavité moulante lorsque le moule est fermé ;
- un accumulateur thermique (241, 242, 340, 440) ;
- des moyens de chauffage par induction (360), configurés pour chauffer l'accumulateur thermique ;
- **caractérisé en ce qu'**il comprend des moyens pour exposer et masquer une surface des coquilles, dite surface réceptrice (131, 132, 330, 341), autre que la surface moulante, à la chaleur de l'accumulateur thermique (241, 242, 340, 440), afin de porter l'intégralité des surface moulantes de la cavité à une température appropiée à l'injection, dans lequel le transfert thermique entre la surface réceptrice et l'accumulateur thermique est réalisé par rayonnement, et qu'il comprend entre l'accumulateur thermique et la surface réceptrice un revêtement favorisant l'absorption du rayonnement infrarouge.

2. Moule, pour le moulage par injection d'une matière plastique, et comprenant :
- deux coquilles (111, 112, 310) comprenant des surfaces moulantes, et délimitant une cavité moulante lorsque le moule est fermé ;
- un accumulateur thermique (241, 242, 340, 440) ;
- des moyens de chauffage par induction (360), configurés pour chauffer l'accumulateur thermique ;
- **caractérisé en ce qu'**il comprend des moyens pour exposer et masquer une surface des coquilles, dite surface réceptrice (131, 132, 330, 341), autre que la surface moulante, à la chaleur de l'accumulateur thermique (241, 242, 340, 440), afin de porter l'intégralité des surface moulantes de la cavité à une température appropiée à l'injection, dans lequel le transfert thermique entre la surface réceptrice et l'accumulateur thermique est réalisé par conduction et qu'il comprend entre la surface réceptrice et l'accumulateur thermique un feuillard (342) mince en matériau thermiquement conducteur malléable ou écrasable.

3. Moule, pour le moulage par injection d'une matière plastique, et comprenant :
- deux coquilles (111, 112, 310) comprenant des surfaces moulantes, et délimitant une cavité moulante lorsque le moule est fermé ;
- un accumulateur thermique (241, 242, 340, 440) ;
- des moyens de chauffage par induction (360), configurés pour chauffer l'accumulateur thermique ;
- **caractérisé en ce qu'**il comprend des moyens pour exposer et masquer une surface des coquilles, dite surface réceptrice (131, 132, 330, 341), autre que la surface moulante, à la chaleur de l'accumulateur thermique (241, 242, 340, 440), afin de porter l'intégralité des surface moulantes de la cavité à une température appropiée à l'injection, , dans lequel le transfert thermique entre la surface réceptrice et l'accumulateur thermique est réalisé part conduction et que la surface réceptrice et l'accumulateur thermique (440) comprennent des profils complémentaires, lesdits profils étant disjoints au niveau de la surface réceptrice lorsque l'accumulateur thermique n'est pas chauffé, et que l'élévation de température de l'accumulateur thermique porte lesdits profils en contact l'un de l'autre.

4. Moule selon la revendication 1, dans lequel une coquille comporte un circuit (131, 132, 330) pour la circulation d'un fluide caloporteur en vue de son refroidissement.

5. Moule selon la revendication 2, dans lequel une coquille comporte un circuit (131, 132, 330) pour la circulation d'un fluide caloporteur en vue de son refroidissement.

6. Moule selon la revendication 3, dans lequel une coquille comporte un circuit (131, 132, 330) pour la circulation d'un fluide caloporteur en vue de son refroidissement.

7. Moule selon la revendication 1, dans lequel l'accumulateur thermique (241, 242) est un bloc de graphite.

8. Moule selon la revendication 2, dans lequel l'accumulateur thermique (340) comprend un matériau à changement de phase.

9. Procédé pour le chauffage de la surface d'un moule selon la revendication 3, comprenant les étapes consistant à :
i. chauffer l'accumulateur thermique (340, 440) ;
ii. exposer une coquille (211, 212, 310) à la chaleur l'accumulateur thermique ;
caractérisé en l'étape ii) est réalisé en mettant l'accumulateur thermique (340, 440) en contact avec une surface de la coquille, ladite mise en contact étant réalisée par la dilatation thermique de l'accumulateur thermique (440, 340) lors de son chauffage à l'étape i).

## Patentansprüche

1. Form zum Formen durch Spritzguss eines Kunststoffmaterials, und Folgendes umfassend:
- zwei Kokillen (111, 112, 310), die Abformoberflächen umfassen und einen Abformhohlraum begrenzen, wenn die Form geschlossen ist;
- einen Wärmespeicher (241, 242, 340, 440);
- Induktionsheizmittel (360), die zum Erhitzen des Wärmespeichers konfiguriert sind;
- **dadurch gekennzeichnet, dass** sie Mittel zum Aussetzen und Verbergen einer Aufnahmeoberfläche (131, 132, 330, 341) genannten anderen Oberfläche der Kokillen, als die Abformoberfläche gegenüber der Wärme des Wärmespeichers (241, 242, 340, 440) umfasst, um die Gesamtheit der Abformoberflächen des Hohlraumes auf eine für das Einspritzen geeignete Temperatur zu bringen, wobei die Wärmeübertragung zwischen der Aufnahmeoberfläche und dem Wärmespeicher durch Strahlung realisiert wird, und sie zwischen dem Wärmespeicher und der Aufnahmeoberfläche eine Beschichtung umfasst, die die Absorption der Infrarotstrahlung fördert.

2. Form zum Formen durch Spritzguss eines Kunststoffmaterials, und umfassend:
- zwei Kokillen (111, 112, 310), die Abformoberflächen umfassen und einen Abformhohlraum begrenzen, wenn die Form geschlossen ist;
- einen Wärmespeicher (241, 242, 340, 440);
- Induktionsheizmittel (360), die zum Erhitzen des Wärmespeichers konfiguriert sind;
- **dadurch gekennzeichnet, dass** sie Mittel zum Aussetzen und Verbergen einer Aufnahmeoberfläche (131, 132, 330, 341) genannten anderen Oberfläche der Kokillen, als die Abformoberfläche gegenüber der Wärme des Wärmespeichers (241, 242, 340, 440) umfasst, um die Gesamtheit der Abformoberflächen des Hohlraumes auf eine für das Einspritzen geeignete Temperatur zu bringen, wobei die Wärmeübertragung zwischen der Aufnahmeoberfläche und dem Wärmespeicher durch Leitung realisiert wird, und sie zwischen der Aufnahmeoberfläche und dem Wärmespeicher ein dünnes Band (342) aus biegsamem oder quetschbarem Wärmeleitmaterial umfasst.

3. Form zum Formen durch Spritzguss eines Kunststoffmaterials, und umfassend:
- zwei Kokillen (111, 112, 310), die Abformoberflächen umfassen und einen Abformhohlraum begrenzen, wenn die Form geschlossen ist;
- einen Wärmespeicher (241, 242, 340, 440);
- Induktionsheizmittel (360), die zum Erhitzen des Wärmespeichers konfiguriert sind;
- **dadurch gekennzeichnet, dass** sie Mittel zum Aussetzen und Verbergen einer Aufnahmeoberfläche (131, 132, 330, 341) genannten anderen Oberfläche der Kokillen, als die Abformoberfläche gegenüber der Wärme des Wärmespeichers (241, 242, 340, 440) umfasst, um die Gesamtheit der Abformoberflächen des Hohlraumes auf eine für das Einspritzen geeignete Temperatur zu bringen, wobei die Wärmeübertragung zwischen der Aufnahmeoberfläche und dem Wärmespeicher durch Leitung realisiert wird, und die Aufnahmeoberfläche und der Wärmespeicher (440) ergänzende Profile umfassen, wobei die Profile im Bereich der Aufnahmeoberfläche nicht verbunden sind, wenn der Wärmespeicher nicht erhitzt wird, und die Erhöhung der Temperatur des Wärmespeichers die Profile miteinander in Kontakt bringt.

4. Form nach Anspruch 1, wobei eine Kokille einen Kreislauf (131, 132, 330) zum Zirkulieren einer Wärmeträgerflüssigkeit zwecks ihrer Abkühlung beinhaltet.

5. Form nach Anspruch 2, wobei eine Kokille einen Kreislauf (131, 132, 330) zum Zirkulieren einer Wärmeträgerflüssigkeit zwecks ihrer Abkühlung beinhaltet.

6. Form nach Anspruch 3, wobei eine Kokille einen Kreislauf (131, 132, 330) zum Zirkulieren einer Wärmeträgerflüssigkeit zwecks ihrer Abkühlung beinhaltet.

7. Form nach Anspruch 1, wobei der Wärmespeicher (241, 242) ein Grafitblock ist.

8. Form nach Anspruch 2, wobei der Wärmespeicher (340) einen Werkstoff mit Phasenänderung umfasst.

9. Verfahren zum Erhitzen der Oberfläche einer Form nach Anspruch 3, die folgenden Schritte umfassend, bestehend aus:
i. Erhitzen des Wärmespeichers (340, 440);
ii. Aussetzen einer Kokille (211, 212, 310) der Wärme des Wärmespeichers;
**dadurch gekennzeichnet, dass** der Schritt ii) durchgeführt wird, indem der Wärmespeicher (340, 440) in Kontakt mit einer Oberfläche der Kokille gebracht wird, wobei das In-Kontakt-bringen durch Wärmeausdehnung des Wärmespeichers (440, 340) bei dessen Erwärmung im Schritt i) realisiert wird.

## Claims

1. A mould, for the injection moulding of a plastic material, and comprising:
- two shells (111, 112, 310) comprising moulding surfaces, and delimiting a moulding cavity when the mould is closed;
- a heat accumulator (241, 242, 340, 440);
- induction heating means (360), configured to heat the heat accumulator;
- **characterised in that** it comprises means to expose and hide a surface of the shells, called the receiving surface (131, 132, 330, 341), other than the moulding surface, to the heat from the heat accumulator (241, 242, 340, 440), so as to bring the whole of the moulding surfaces of the cavity to an appropriate temperature for injection, wherein the heat transfer between the receiving surface and the heat accumulator is made by radiation, and that it comprises between the heat accumulator and the receiving surface a coating promoting infrared radiation absorption.

2. A mould, for the injection moulding of a plastic material, and comprising:
- two shells (111, 112, 310) comprising moulding surfaces, and delimiting a moulding cavity when the mould is closed;
- a heat accumulator (241, 242, 340, 440);
- induction heating means (360), configured to heat the heat accumulator;
- **characterised in that** it comprises means to expose and hide a surface of the shells, called the receiving surface (131, 132, 330, 341), other than the moulding surface, to the heat from the heat accumulator (241, 242, 340, 440), so as to bring the whole of the moulding surfaces of the cavity to an appropriate temperature for injection, wherein the heat transfer between the receiving surface and the heat accumulator is made by conduction and that it comprises between the heat accumulator and the receiving surface a thin strip (342) made of malleable or crushable heat-conducting material.

3. A mould, for the injection moulding of a plastic material, and comprising:
- two shells (111, 112, 310) comprising moulding surfaces, and delimiting a moulding cavity when the mould is closed;
- a heat accumulator (241, 242, 340, 440);
- induction heating means (360), configured to heat the heat accumulator;
- **characterised in that** it comprises means to expose and hide a surface of the shells, called the receiving surface (131, 132, 330, 341), other than the moulding surface, to the heat from the heat accumulator (241, 242, 340, 440), so as to bring all of the moulding surfaces of the cavity to an appropriate temperature for injection, wherein the heat transfer between the receiving surface and the heat accumulator is made by conduction and that the receiving surface and the heat accumulator (440) comprise complementary profiles, said profiles being separated at the receiving surface when the heat accumulator is not heated, and that the temperature rise of the heat accumulator brings said profiles in contact with one another.

4. The mould according to claim 1, wherein a shell includes a circuit (131, 132, 330) for the circulation of a heat transporting fluid in view of its cooling thereof.

5. The mould according to claim 2, wherein a shell includes a circuit (131, 132, 330) for the circulation of a heat transporting fluid in view of its cooling thereof.

6. The mould according to claim 6, wherein a shell includes a circuit (131, 132, 330) for the circulation of a heat transporting fluid in view of its cooling thereof.

7. the mould according to claim 1, wherein the heat accumulator (241, 242) is a graphite block.

8. the mould according to claim 2, wherein the heat accumulator (340) comprises a phase changing material.

9. A method for heating the surface of a mould according to claim 3, comprising steps consisting of:
i. heating the heat accumulator (340, 440);
ii. exposing a shell (211, 212, 310) to the heat from the heat accumulator;
**characterised in that** step ii) is done by bringing the heat accumulator (340, 440) into contact with a surface of the shell, said contact being done by thermal expansion of the heat accumulator (440, 340) during the heating thereof in step i).
